# EUROPEAN PATENT APPLICATION

(11) **EP 0 635 546 A1**
(43) Date of publication of application: **25.01.1995**
(21) Application number: 94304918.9
(22) Date of filing: 05.07.1994
(51) Int. Cl.: C08L 69/00, C08K 5/49

(54) **Aromatic polycarbonate compositions**

(30) Priority: 19.07.1993 US 93254
(71) Applicant: GENERAL ELECTRIC COMPANY, Schenectady, NY 12345 (US)
(72) Inventor: Van Hout, Henricus Hubertus M., NL-4661 VX Halsteren (NL); Snow, Kevin Mitchell, Mount Vernon, Indiana 47620 (US); Rijken, Cornelis Jan Maria, NL-4625 BJ Bergen op Zoom (NL); Hovatter, Thomas Wayne, Newburgh, Indiana 47629 (US)
(74) Representative: Pratt, Richard Wilson

(57) **Abstract**

Problems may sometimes occur in the manufacture of optical disks from polycarbonate compositions. Cloud formation may occur notably when short cycle times are used. It has been found that cloud formation is eliminated or minimized when polycarbonate compositions are used in disk manufacture which are free of added release agents. The application relates to polycarbonate compositions having an aromatic polycarbonate having a weight-averaged molecular weight from 15,000 to 21,000 which contain no added release agents. The application also relates to substrates for optical disks manufactured from said polymer mixture.

## Description

The invention relates to a polymer composition based on an aromatic polycarbonate having a weight-averaged molecular weight from 15,000 to 21,000, the composition comprising no release agent.

The invention also relates to a substrate for an optical disk manufactured from the polymer composition according to the invention.

Aromatic polycarbonates and their preparation are generally known. Aromatic polycarbonates have particular properties as a result of which they are particularly suitable to manufacture therefrom substrates for optical disks, for example, compact disks for CD-ROM, mini-discs and other data storage applications as well as audio and video applications, such applications are described, for example, in the following patent publications: EP-A-0177713, EP-A-0293769, EP-A-0305214, GB 2114501.

In these applications, the substrates for optical disks are manufactured by injection molding, of a polycarbonate composition. During the injection molding the polycarbonate compositions are heated and injected into a mold. After cooling, the mold is opened and the formed article is taken out of the mold. In such applications the polymer mixture always requires the presence of a small quantity of, for example, 0.1 to 0.5% by weight, a release agent The release agent serves to facilitate the release of the formed article from the mold.

In manufacturing articles by means of injection molding, reduction of the molding cycle time, i.e. the time between the removal from the mold of two successively injection-molded articles, as much as possible is highly desirable to optimize molding productivity. In manufacturing the substrate of compact disks, cycle times of approximately 4 to 7 seconds have already been achieved.

Upon reducing the cycle time, problems may occur which adversely influence the performance properties of the optical disk. It has been found, for example, that upon reducing the cycle time certain optical problems of the final product occur, namely so-called 'cloud-forming' also sometimes referred to by those skilled in the art of optical disks as "clouding", "staining" or "ploughing." After the formed substrate has been metallized to manufacture an optical disk therefrom, large spots, so-called "clouds" are sometimes seen on the surface. These clouds are detrimental to the properties of the optical disks: the so-called "block error rate"(BLER) and "bit error rate" (BER) increase. The BLER and BER are measures of the quality of a compact disk: the lower the values, the better is the quality of the optical disk. A lower BLER and BER value generally means that the optical disk has a longer lifetime. The BLER is described in the Philips Compact Disk Redbook.

At first the causes of the clouds were not quite clear. It was initially believed that deposits had formed on the substrate. This turned out not to be the case. Microscopic examination with Surface Force Microscopy and Scanning Tunneling Microscopy of optical disks with clouds determined what clouds actually are. Optical disks comprise very fine details in their surface, so-called pits having dimensions on a micro scale. In areas with clouds, the edges of the pits are less regularly formed in that they usually have an edge on one side which is slightly elevated. These are elevations of a few tenths of a micrometer. It is believed that these irregular, locally raised edges are formed during the release from the mold (in the case of the optical disks usually a so-called "stamper") of the substrate formed by injection molding. Attempts to reduce the cloud forming by a better control of the releasing operation have failed.

The applicants have found quite unexpectedly that the use of a polymer composition which does not comprise a release agent results in a considerable reduction of the cloud formation.

The present invention is a polymer composition which is completely free of any added release agent and comprises an aromatic polycarbonate having a weight-averaged molecular weight from 15,000 to 21,000.

The invention also is a substrate for an optical disk manufactured from the polymer composition of the present invention.

The polymer mixture of the present invention preferably comprises an aromatic polycarbonate and a phosphorus-containing stabilizer, i.e. the polymer composition does not require the presence of constituents added to the aromatic polycarbonate and, when needed, the phosphorus-containing stabilizer to provide a suitable substrate for an optical disk.

Good results have also been obtained with a polymer mixture which comprises an aromatic polycarbonate obtained by polymerization via the melt process and containing a phosphorus containing stabilizer. In preparing polycarbonates in the melt, acid compounds having a pKa-value of no more than three and/or derivatives thereof, for example, sulphonic acid or sulphonic acid derivates, are often added. The invention also comprises polymer compositions which consist of an aromatic polycarbonate obtained by polymerization in the melt employing, an acid compound having a pKa-value three or less and/or derivatives thereof, for example, a sulphonic acid or a sulphonic acid derivative and a phosphorous stabilizer.

The weight-averaged molecular weight of the aromatic polycarbonate is preferably from 17,000 to 19,000.

The content of the phosophorus containing stabilizer is preferably from 0.1 to 5,000 ppm, more preferably, from 1 to 3,000 ppm and, still more preferably, from 10 to 1,000 ppm. In the case of high-purity polycarbonates it is possible to work without a phosphorus-containing stabilizer.

Suitable phosphorus-containing stabilizers for stabilizing polycarbonates are well known in the art. Examples are phosphites, phosphines, phosphates, phosphonates and phosphorus acid.

As already stated, the polymer composition of the present invention comprises an aromatic polycarbonate. The most important requirement to be imposed upon the polycarbonate is the weight-averaged molecular weight. When the weight-averaged molecular weight is higher than 21,000, it is not readily possible to manufacture therefrom a good substrate for optical applications at a satisfactory production rate. When the weight-averaged molecular weight is lower than 15,000, the mechanical properties of the substrates manufactured therefrom are unsatisfactory.

It is further preferred to use in the preparation of the polymer composition according to the invention an aromatic polycarbonate of a purity which is as high as possible.

It is preferred that constituents in the polycarbonate having a weight averaged molecular weight of less than 5,000 be no more than 15% by weight, more preferred to be no more than 10% by and most preferred to be no more than 8.5% by weight of the polycarbonate.

Various methods are known for preparing aromatic polycarbonates. Any known method may be considered in principle.

Such polymers may be prepared by reacting a carbonate precursor such as phosgene, for example, with a dihydric phenol such as 2,2-bis(4-hydroxyphenyl) propane, hereinafter referred to as "bisphenol-A," to provide a linear polymer consisting of dihydric phenol derived units bonded to one another through carbonate linkages. The polymers may be linear or branched. In those processes which require the polymers to be end-capped, any end-capper in general use may be employed, e.g. phenol, tertiary-butyl phenol, octyl phenol, cumyl phenol, chroman-I, etc. Particularly preferred end-cappers are paratertiary-butyl phenol, octyl phenol, paracumyl phenol and chroman-I. Thus, the process by which the polycarbonate polymer is made is not critical to the present invention. In particular, the processes in general commercial use are interfacial polymerization and polymerization in the melt.

In the interfacial polymerization process, monophenolic compounds are added as end capping agents so as to control the molecular weight. In order to minimize the content of oligomers special methods are employed in the interfacial polymerization. In a preferred process, for example, bischloroformates are used as carbonate formers in the actual polymerization reaction and no phosgene is employed in the reaction. The melt process also is another preferred process because of the high purity of the polycarbonate produced by the process.

All these known methods of preparing polycarbonates are suitable for the preparation of the aromatic polycarbonate for the polymer composition according to the invention.

Suitable methods are disclosed, for example, in the patent publications mentioned hereinbefore. Further reference may be made to the patent publications mentioned in the examples hereinafter.

### Example I and comparative example A

An aromatic polycarbonate derived from bisphenol A was prepared in the manner as described in USA-4,743,676, incorporated herein by reference. In the method a bischloroformate was used as a carbonate former and paracumyl phenol was used as an end capping agent The weight-averaged molecular weight of the resulting polycarbonate (measured by means of gel permeation chromatography) was 17,400. In the polymerization reaction, a few carbonate oligomers are present in the reaction product in addition to polycarbonate polymer. The polycarbonate according to this example comprised di-paracumyl phenyl carbonate as an oligomer having the lowest molecular weight (molecular weight 450). The content of di-paracumyl phenyl carbonate was less than 100 ppm (measured by means of gel permeation chromatography). The content of constituents having a weight-averaged molecular weight of less than 5,000 was approximately 8.5% by weight.

The above-mentioned aromatic polycarbonate, together with 300 ppm of a phosphite stabilizer, was compounded in an extruder and pelletized. No release agent was added.

The resulting pellets were pre-dried at 120° C for two hours and then injection-molded into disk substrates for compact disks in a Kraus Maffei injection molding machine. The cycle time was 5.5-6.5 sec; the melting-temperature of the polycarbonate was 310-330° C, the mold temperature was 70° C.

Several series of disk substrates - each series being at least one hundred pieces - were injection-molded in the manner described hereinbefore. The resulting substrates were metallized in the conventional manner. The surface quality was then determined. This determination was carried out by two independent persons experienced in the field of the evaluation of compact disks. When clouds were clearly visible on the metallized disks, the disks were rejected. It is noted previously, clouds are defined as spots or areas having a deviating appearance (color or brightness) as compared with the surrounding part of the disk.

This determination resulted in a rejection percentage which varied from 0 to 10% for the various series.

In comparative example A, the activities were carried out as described hereinbefore with the only exception that during compounding and pelletizing the aromatic polycarbonate, 0.3% by weight of a release agent, namely pentaerythritol tetrastearate, was also added.

Disks were also manufactured by injection molding (in the same manner as described hereinbefore) from the pellets obtained in this manner. The disks were examined; a rejection percentage of 60-100% was found.

In the given test circumstances, which correspond to the production circumstances used in practice, the absence of a release agent provides a considerable improvement: a reduction of the rejection percentage from 60-100% to 0-10%.

### Example II and comparative example B

According to a conventionally used interfacial polymerization, an aromatic polycarbonate having a weight-averaged molecular weight of 17,500 was prepared in one batch starting from bisphenol A and phosgene. Paracumyl phenol was used as an end capping agent.

The method used corresponds in outline to the method as described in USA-3,028,365, incorporated herein by reference.

The resulting aromatic polycarbonate powder comprises 1,500 ppm of di-paracumyl phenyl carbonate (as an oligomer having the lowest molecular weight). The content of constituents having a weight-averaged molecular weight of less than 5,000 was approximately 8.5% by weight.

This polycarbonate was further processed in the same manner as described in example I (i.e. without the addition of a release agent). Substrates for optical disks were again injection molded from the pellets; the substrates were metallized and evaluated visually. The same methods were used as in example I.

In comparative example B, 0.3% by weight of the same release agent as used in comparative example A was added upon compounding and pelletizing the polycarbonate.

In example II according to the invention a rejection percentage of 0-10% was observed; in comparative example B a rejection percentage of 60-100% was observed.

### Example III and comparative example C

In these examples, an aromatic polycarbonate which had a weight-averaged molecular weight of 17,500 and had been obtained by polymerization of diphenyl carbonate and bisphenol A in the melt process was used. The preparation of aromatic polycarbonates in the melt is a generally known method as described, for example, in EP-A-520,806.

However, a method was used in particular which corresponded approximately to example 7 of EP-A-520,806. The reaction, however, was carried out in a continuous production process. As in example 7, a phosphorus-containing stabilizer was not used.

The pellets obtained in this method had a diphenyl carbonate content of 600 ppm. Diphenyl carbonate has a molecular weight of 214 and is the oligomer having the lowest molecular weight which was present in the polycarbonate. The content of constituents having a weight-averaged molecular weight of less than 5,000 was approximately 7.5% by weight. Both contents were determined by means of gel permeation chromatography.

Substrates were injection molded from the pellets. The substrates were metallized and examined. All this was carried out in the same manner as described in Example I.

In comparative example C, 0.1% by weight of a release agent (a branched olefin oligomer), and .02% by weight of other additives were added in the final step of the melt polymerization.

The metallized disks obtained in example III according to the invention showed a reject percentage of 0%. The metallized disks according to comparative example C showed a reject percentage of 80-100%.

All the patent publications mentioned in the present Patent Application are considered to be incorporated herein by reference.

## Claims

1. A polymer composition based on an aromatic polycarbonate having a weight-averaged molecular weight from 15,000 to 21,000, wherein the composition is free of any added release agent.

2. A polymer composition as claimed in Claim 1, wherein the polymer mixture consists of an aromatic polycarbonate and a phosphorus-containing stabilizer.

3. A polymer composition as claimed in Claim 1, wherein the polymer mixture consists of an aromatic polycarbonate, obtained by polymerization in the melt and a phosphorus-containing stabilizer.

4. A polymer composition as claimed in Claim 3, wherein the polymer mixture consists of an aromatic polycarbonate obtained by polymerization in the melt, an acid compound having a pKa-value of three or less and/or a derivative thereof and a phosphorus-containing stabilizer.

5. A polymer composition as claimed in Claim 1, wherein the aromatic polycarbonate has a weight-averaged molecular weight from 17,000 to 19,000.

6. A polymer composition as claimed in Claim 2, wherein the content of the phosphorus-containing stabilizer is from 0.1 to 5,000 ppm.

7. A substrate for an optical disk manufactured from the polymer composition as claimed in any preceding claim.

8. A substrate for an optical disk manufactured from a polymer composition which consists of an aromatic polycarbonate obtained by polymerization in the melt having a weight-averaged molecular weight from 15,000 to 21,000, and an acid compound having a pKa-value of no more than three and/or a derivative thereof.
